(19) **Europäisches Patentamt / European Patent Office / Office européen des brevets**

(11) **EP 3 437 183 B1**

(12) **FASCICULE DE BREVET EUROPEEN**

(45) Date de publication et mention de la délivrance du brevet:
**17.02.2021 Bulletin 2021/07**

(21) Numéro de dépôt: **17713717.1**

(22) Date de dépôt: **28.02.2017**

(51) Int Cl.:
**H02P 9/30** *(2006.01)* **H02J 7/14** *(2006.01)*
**H02J 7/00** *(2006.01)*

(86) Numéro de dépôt international:
**PCT/FR2017/050438**

(87) Numéro de publication internationale:
**WO 2017/168063 (05.10.2017 Gazette 2017/40)**

(54) **DISPOSITIF DE REGULATION D'UN ALTERNATEUR DE VEHICULE AUTOMOBILE ET ALTERNATEUR CORRESPONDANT**

VORRICHTUNG ZUR REGELUNG EINER LICHTMASCHINE EINES KRAFTFAHRZEUGS UND ENTSPRECHENDE LICHTMASCHINE

DEVICE FOR REGULATING A MOTOR VEHICLE ALTERNATOR AND CORRESPONDING ALTERNATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2016 FR 1652681**

(43) Date de publication de la demande:
**06.02.2019 Bulletin 2019/06**

(73) Titulaire: **Valeo Equipements Electriques Moteur 94046 Créteil Cedex (FR)**

(72) Inventeurs:
• **CHASSARD, Pierre 94046 CRÉTEIL (FR)**
• **TISSERAND, Pierre 94046 CRÉTEIL (FR)**
• **RAGAINE, Pierre-François 94046 CRÉTEIL (FR)**

(74) Mandataire: **Duprez, Richard Valeo Equipements Électriques Moteur 2, rue André Boulle 94046 Creteil Cedex (FR)**

(56) Documents cités:
WO-A2-2012/168605    FR-A1- 2 420 874
FR-A1- 2 918 225    US-A1- 2006 238 172
US-A1- 2007 268 003

**Description**

**DOMAINE TECHNIQUE DE L'INVENTION.**

La présente invention concerne un dispositif de régulation d'un alternateur de véhicule automobile. L'invention concerne aussi l'alternateur comportant ce dispositif de régulation.

**ARRIERE PLAN TECHNOLOGIQUE DE L'INVENTION.**

Afin de faire face à l'augmentation de la puissance que doit aujourd'hui délivrer un alternateur, ou alterno-démarreur, de véhicule automobile du fait de l'accroissement de la consommation des équipements embarqués, on tend à utiliser des tensions nominales de réseau de bord de l'ordre de 48 V au lieu de 12 V afin de fournir des puissances de l'ordre de 4 à 10 KW.

Par ailleurs, même si la tension nominale du réseau de bord reste de 12 V, il peut être souhaitable dans certains cas d'accroître ("booster") ponctuellement la performance en débit d'un alternateur en augmentant une intensité d'un courant d'excitation circulant dans un rotor de l'alternateur.

Une façon d'augmenter la performance en débit d'un alternateur standard est de diminuer l'impédance d'un enroulement d'excitation du rotor, ce qui a pour effet d'augmenter le courant d'excitation, donc le flux magnétique, pour une même tension nominale du réseau de bord.

Cette façon de procéder est avantageuse dans une opération d'abaissement en gamme ("downsizing"), c'est-à-dire quand on cherche à utiliser dans un véhicule d'une certaine catégorie un équipement en "boostant" ses caractéristiques.

Mais, dans le cas d'un alternateur "boosté", se pose évidemment à l'équipementier le problème de l'équilibre thermique de la machine, l'augmentation des courants augmentant corrélativement les pertes par effet Joule.

Il est donc nécessaire de prévoir une limitation du courant d'alternateur à une valeur dépendant de la température de l'alternateur.

Les documents US 2006/238172 A1 et WO 2012/168605 A2 sont des documents de l'art antérieur que l'invention cherche à améliorer.

Dans la demande de brevet FR2938987, la société VALEO EQUIPEMENTS ELECTRIQUES MOTEUR décrit un procédé de limitation d'un courant d'excitation maximum dans un système à alterno-démarreur pour véhicule. Selon ce procédé, le courant d'excitation maximum est déterminé à partir d'au moins une courbe de limitation de courant d'excitation maximum préprogrammée, fonction de la température de l'alterno-démarreur. Une vitesse de rotation de l'alterno-démarreur est également prise en compte pour déterminer le courant d'excitation maximum.

Le procédé décrit permet une stabilisation efficace de la température en régime de vitesse stationnaire, mais il a été constaté par l'entité inventive une dégradation du débit de courant de la machine lors de phases de transition en vitesse.

En effet, le retour à un équilibre thermique est un phénomène lent (constante de temps thermique ayant un ordre de grandeur de 200 s) au regard d'une transition en vitesse qui peut être de l'ordre de quelques secondes, par exemple. Il en résulte que le courant d'excitation maximum peut être inutilement limité par le procédé de limitation alors que la température de la machine tend à se stabiliser.

**DESCRIPTION GENERALE DE L'INVENTION.**

La présente invention vise donc à modifier le comportement d'une fonction de limitation thermique pour éviter cette perte de débit, en particulier lors des phases de décéleration et d'accélération du véhicule.

Elle concerne un dispositif de régulation d'un alternateur de véhicule automobile asservissant une tension continue générée par cet alternateur à une consigne de tension prédéterminée.

Cette tension continue est asservie en contrôlant un courant circulant dans un circuit d'excitation comportant un enroulement d'excitation d'un rotor de l'alternateur.

Ce dispositif de régulation est du type de ceux connus en soi maintenant en outre une température courante de l'alternateur en dessous d'une température maximale admissible prédéterminée.

Conformément à l'invention, le dispositif de régulation d'un alternateur de véhicule automobile comprend une boucle d'asservissement comportant:

- des moyens d'acquisition de la tension continue générée et fournissant une tension mesurée;
- un premier comparateur de cette tension mesurée de la consigne de tension générant une erreur de tension;
- des premiers moyens de conditionnement de cette erreur de tension fournissant un pourcentage d'excitation d'entrée;
- un module de saturation fournissant en fonction de ce pourcentage d'excitation d'entrée un pourcentage d'excitation de sortie limité à un pourcentage d'excitation maximal admissible;

- un générateur d'un signal modulé en largeur d'impulsion présentant un rapport cyclique égal au pourcentage d'excitation de sortie;
- un commutateur à semi-conducteur piloté par le signal modulé en largeur d'impulsion contrôlant l'intensité du courant d'excitation;

Le dispositif de régulation selon l'invention comprend en outre une boucle d'asservissement en température comportant:

- un premier moyen de mesure/estimation de température fournissant la température courante de l'alternateur;
- un second comparateur générant une erreur de température entre la température maximale admissible et la température courante;
- des moyens d'entrée d'une vitesse de rotation courante de l'alternateur;
- un module de commande fournissant le pourcentage d'excitation maximal admissible en fonction de l'erreur de température et d'une correction de vitesse fournie par des moyens de correction de vitesse selon une loi de correction prédéterminée fonction de la vitesse de rotation courante.

Selon l'invention, la boucle d'asservissement en température comprend en outre un moyen de prise en compte d'une température ambiante et la loi de correction est paramétrée par la température ambiante.

Selon l'invention encore, la loi de correction a une forme dite en cuvette et :

- présente au moins une première pente négative entre une première vitesse de rotation qui est fonction de la température ambiante et une deuxième vitesse de rotation prédéterminée;
- est nulle entre la deuxième vitesse de rotation et une troisième vitesse de rotation prédéterminée;
- présente au moins une seconde pente positive entre la troisième vitesse de rotation et une quatrième vitesse de rotation qui varie en fonction de ladite température ambiante.

Dans le dispositif de régulation d'un alternateur de véhicule automobile selon l'invention, le module de commande comprend en outre:

- des seconds moyens de conditionnement de l'erreur de température fournissant un pourcentage de correction thermique;
- un comparateur-sommateur calculant le pourcentage d'excitation maximal admissible en soustrayant le pourcentage de correction thermique d'une première somme d'un pourcentage d'excitation maximal de référence et de la correction de vitesse.

Selon l'invention encore, le module de commande comprend en outre des moyens de forçage du pourcentage d'excitation maximal admissible au pourcentage d'excitation maximal de référence.

Ces moyens de forçage sont activés selon l'invention par un ordre d'activation d'une unité de contrôle moteur du véhicule.

Les moyens de forçage sont activés, selon l'invention, si et seulement si une variation temporelle (dV/dt) de la vitesse de rotation courante est supérieure en valeur absolue à un seuil prédéterminé.

Les moyens de forçage restent activés, selon l'invention, tant que la température courante est inférieure à une température limite égale à la température maximale admissible augmentée d'un accroissement de température prédéterminé.

Les moyens de forçage sont désactivés, selon l'invention, par une minuterie pendant une durée prédéterminée quand la température courante atteint la température limite.

L'objet de l'invention est aussi un alternateur de véhicule automobile comprenant un dispositif de régulation tel que décrit précédemment.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

**BREVE DESCRIPTION DES DESSINS.**

Les **Figures 1a et 1b** montrent des relevés de débits et de températures en fonction d'une vitesse de rotation d'alternateurs connus de l'état de la technique présentant un équilibre thermique non critique et critique, respectivement.

La **Figure 2** est un schéma de principe général d'un dispositif de régulation d'un alternateur de véhicule automobile comprenant une boucle d'asservissement en température selon l'invention.

Les **Figures 3a et 3b** sont respectivement un graphe représentant une loi de commande définissant un pourcentage d'excitation maximal admissible et un autre graphe représentant une fonction de saturation résultant de cette loi de commande.

La **Figure 4a** établit une comparaison entre les relevés de débits et de températures d'un alternateur standard (traits fins) et d'un alternateur similaire muni d'un dispositif de régulation selon l'invention (traits épais) dans une hypothèse où une correction de vitesse selon l'invention n'est pas appliquée, et les **Figure 4b et 4c** montrent respectivement le pourcentage d'excitation maximal admissible pour l'un et l'autre de ces alternateurs.

Les **Figures 5a, 5b, 5c et 5d** montrent respectivement des diagrammes de temps d'une transition d'une vitesse de rotation d'un alternateur muni d'un dispositif de régulation selon l'invention, d'un courant d'excitation, d'une température courante et du débit de l'alternateur dans l'hypothèse où la correction de vitesse selon l'invention n'est pas appliquée,

La **Figure 6** établit une comparaison entre les relevés de débits au cours d'une transition de vitesse quand la boucle d'asservissement en température selon l'invention est désactivée avant la transition de vitesse (trait en pointillé) et quand elle est active (trait plein), dans l'hypothèse où la correction de vitesse selon l'invention n'est pas appliquée.

La **Figure 7** illustre des effets sur le pourcentage d'excitation maximal admissible d'une loi de correction de vitesse intervenant dans la boucle asservissement en température du dispositif de régulation d'un alternateur de véhicule automobile selon l'invention.

La **Figure 8** est un schéma de principe détaillé de la boucle d'asservissement en température du dispositif de régulation d'un alternateur de véhicule automobile selon un premier mode de réalisation préféré de l'invention.

Les **Figures 9a, 9b, 9c, 9d, 9e et 9f** montrent respectivement des diagrammes de temps de la transition de vitesse de l'alternateur muni d'un dispositif de régulation selon le premier mode de réalisation préféré de l'invention, de la température courante, d'un pourcentage de correction thermique, de la correction de vitesse, d'un pourcentage d'excitation maximal admissible et du débit de l'alternateur.

La **Figure 10** établit une comparaison entre les relevés de débits au cours d'une transition de vitesse où la correction de vitesse de la boucle d'asservissement en température selon le premier mode de réalisation préféré de l'invention montré sur la **Figure 8** intervient (trait plein), et si la correction de vitesse selon l'invention n'était pas appliquée (trait en pointillé).

La **Figure 11** est un schéma de principe détaillé de la boucle d'asservissement en température du dispositif de régulation d'un alternateur de véhicule automobile selon un second mode de réalisation préféré de l'invention.

La **Figure 12** établit une comparaison entre les relevés de débits au cours d'une transition de vitesse où la correction de vitesse de la boucle d'asservissement en température selon le premier mode de réalisation préféré de l'invention montré sur la **Figure 8** intervient (trait plein), et où une action de la boucle d'asservissement en température est temporairement suspendue selon le second mode de réalisation préféré de l'invention montré sur la **Figure 11** (trait en pointillé).

La **Figure 13** est un exemple de diagramme de temps du pourcentage d'excitation maximal admissible (trait plein) sur une réalisation concrète d'un alternateur muni du dispositif de régulation selon l'invention (courbe asymptotique en pointillé).

La **Figure 14** illustre un comportement statique d'un alternateur selon l'invention avec les courbes de débit (traits évidés) et de température (traits pleins) avec (traits continus) et sans limitation (traits mixtes).

## DESCRIPTION DES MODES DE REALISATION PREFERES DE L'INVENTION.

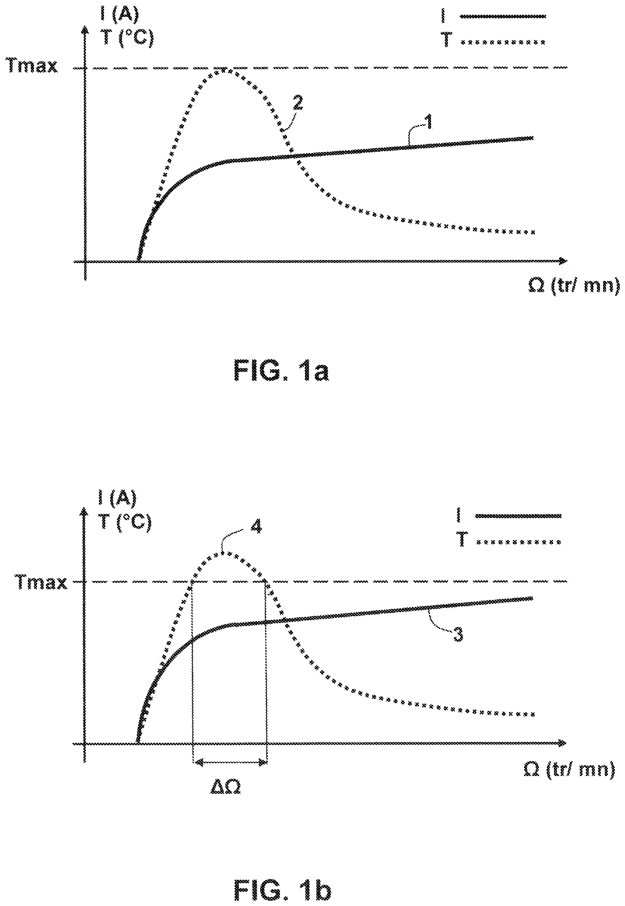

La problématique thermique d'un alternateur, de manière générale, est illustrée sur les **Figures 1a et 1b**.

La courbe en trait plein 1 de la **Figure 1a** représente la caractéristique d'un débit I d'un alternateur en fonction de sa vitesse de rotation $\Omega$ pour une excitation maximale (dite «plein champ») à une température ambiante maximale (par exemple 125°C) et à une tension de fonctionnement imposée (par exemple 13.5V).

La température alternateur «fer» T, c'est-à-dire en un point de la masse magnétique du stator, peut alors être relevée pour différentes vitesses de rotation $\Omega$ du rotor en des points dit «stabilisés»; la courbe résultante est également montrée en trait pointillé 2 sur la **Figure 1a.**

Un alternateur qui possède un bon équilibre thermique possède une température «fer» T qui ne dépasse pas le seuil de température maximale admissible « fer » $T_{max}$. Cet équilibre thermique est alors non critique pour les conditions de fonctionnement précédemment citées.

Dans le cas d'une machine où la performance en débit I est augmentée (alternateur « boosté ») comme le montre l'autre courbe en trait plein 3 de la **Figure 1b,** en diminuant l'impédance d'un enroulement d'excitation du rotor, par exemple, ce qui a pour effet d'augmenter un courant d'excitation, la température «fer» T dépasse le seuil de température maximale admissible $T_{max}$ dans les conditions de fonctionnement précitées sur un intervalle de vitesse $\Delta\Omega$ dit «critique en température», comme le montre également l'autre courbe en pointillé 4. Un tel évènement de dépassement de seuil de température maximale peut également se produire lorsque l'alternateur fonctionne avec une température sous capot supérieure à la normale.

Dans ces conditions, les moyens de refroidissement de l'alternateur n'arrivent pas à évacuer la chaleur due aux différentes pertes par effet Joule (pertes fer, pertes cuivre,...).

L'équilibre thermique de la machine est alors considéré comme rompu. Une durée trop longue de fonctionnement de l'alternateur dans l'intervalle de vitesse critique en température $\Delta\Omega$ est susceptible d'engendrer une destruction de la machine par une température excessive.

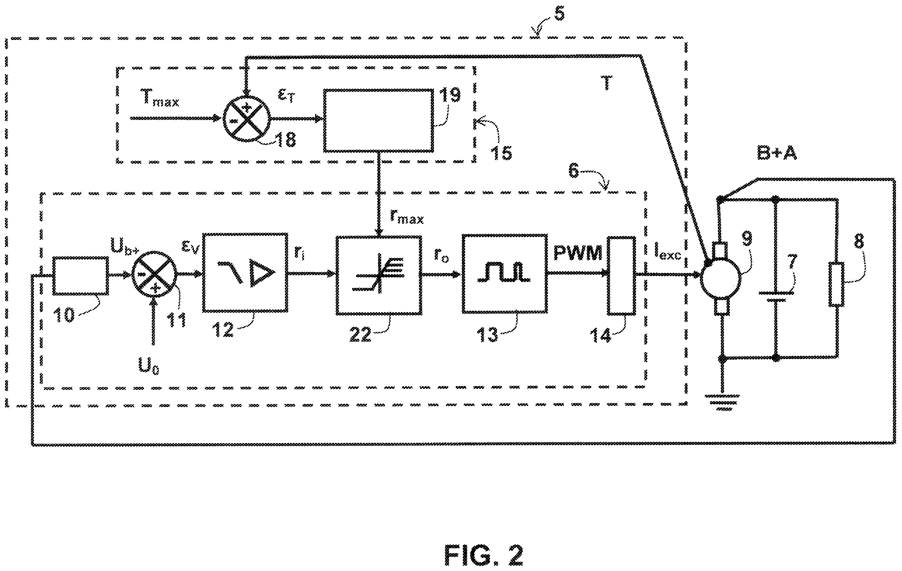

Le dispositif de régulation 5 d'un alternateur selon l'invention, dont le schéma de principe général est donné sur la **Figure 2,** s'attache essentiellement au problème de la stabilité thermique d'un alternateur "boosté".

Pour résoudre la problématique thermique de l'alternateur, une solution proposée par l'entité inventive est l'utilisation du régulateur 5 afin de contrôler une température courante T de l'alternateur à l'aide d'un capteur placé sur l'alternateur (plus précisément, par exemple sur le fer d'un stator ou sur un palier arrière de la machine pour mesurer des températures des diodes).

De manière connue en soi, ce régulateur 5 comprend une boucle d'asservissement en tension 6 permettant d'asservir à une consigne de tension $U_0$ une tension continue B+A d'un réseau de bord du véhicule, comprenant en général une batterie 7 et divers équipements 8, alimenté par l'alternateur 9.

Classiquement cette boucle d'asservissement en tension 6 comporte:

- des moyens d'acquisition 10 de la tension continue B+A prise sur une borne positive de l'alternateur 9 fournissant une tension mesurée $U_{b+}$;
- un premier comparateur 11 de la tension mesurée $U_{b+}$ de la consigne de tension $U_0$ générant une erreur de tension $\varepsilon_V$;
- des premiers moyens de conditionnement 12 de cette erreur de tension $\varepsilon_V$ par filtrage et adaptation de gain fournissant un pourcentage d'excitation d'entrée $r_i$;
- un générateur 13 d'un signal modulé en largeur d'impulsion PWM présentant un rapport cyclique $r_o$ égal à un pourcentage d'excitation de sortie fonction de l'erreur de tension $\varepsilon_V$ et pilotant un commutateur à semi-conducteur 14 contrôlant l'intensité d'excitation $I_{exc}$.

Selon l'invention, le régulateur 5 comprend en outre une boucle d'asservissement en température 15.

Comme le montre bien la **Figure 2,** cette boucle d'asservissement en température 15 comporte un premier capteur de température fournissant la température courante T de l'alternateur 9.

Ce peut être un capteur externe au régulateur 5, placé sur le fer du stator ou sur le palier arrière pour mesurer la température des diodes, ou alternativement, un capteur interne au régulateur 5, mesurant une température de jonction du commutateur à semi-conducteur 14.

Un second comparateur 18 d'une température maximale admissible prédéterminée $T_{max}$ de la température courante T génère une erreur de température $\varepsilon_T$ à partir de laquelle un module de commande 19 fournit à la boucle d'asservissement en tension 6 un pourcentage d'excitation maximal admissible $r_{max}$ permettant de maintenir la température courante T de l'alternateur 9 à la valeur de la température maximale admissible prédéterminée $T_{max}$.

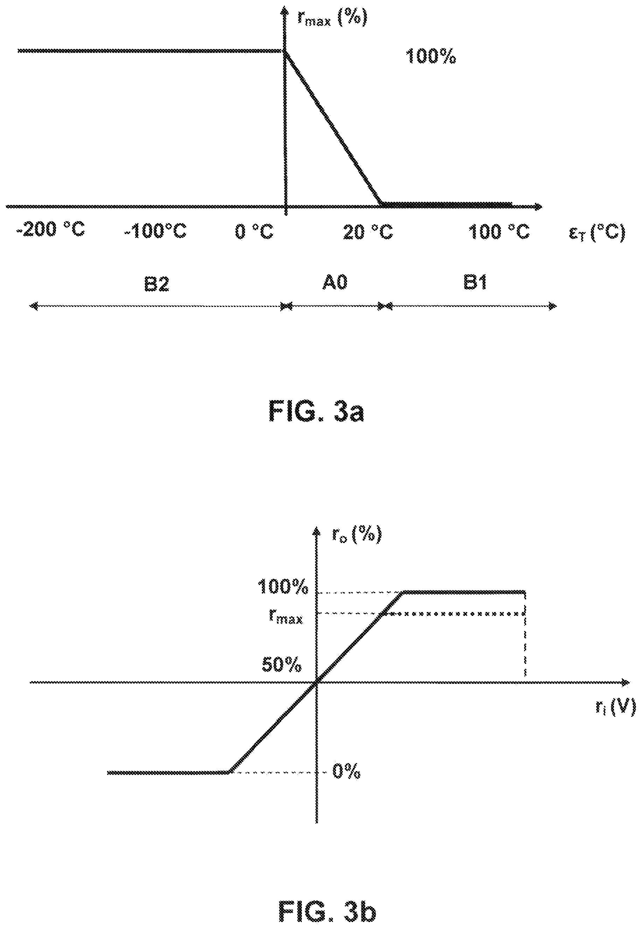

Un exemple de loi de commande définissant le pourcentage d'excitation maximal admissible $r_{max}$ en fonction de l'erreur de température $\varepsilon_T$ est représentée sur la **Figure 3a.**

Dans cet exemple, dans une zone linéaire A0, une pente du pourcentage d'excitation maximal admissible $r_{max}$ en fonction de l'erreur de température $\varepsilon_T$ est d'environ -5%/ °C, sachant que cette pente dépendra des gains appliqués dans la chaine de traitement de régulation.

Dans la zone linéaire AO, la pente peut être adaptée afin d'obtenir un gain de boucle de régulation en température plus ou moins important suivant une précision de température limitée souhaitée.

Dans une autre zone B1 de la loi de commande, où l'erreur de température $\varepsilon_T$ est comprise entre 20°C et 100°C, l'alternateur 9 est à une température courante T très supérieure à la température maximale admissible prédéterminée $T_{max}$ et l'excitation est coupée (pourcentage d'excitation maximal admissible $r_{max}$ nul).

Si l'erreur de température $\varepsilon_T$ est négative (zone B2 de la loi de commande), la température courante T est très inférieure à la température maximale admissible prédéterminée $T_{max}$ et l'excitation ne dépend que de la boucle d'asservissement en tension 6 (pourcentage d'excitation maximal admissible $r_{max}$ de 100%).

Le pourcentage d'excitation maximal admissible $r_{max}$ fourni par le module de commande 19, 20, 21 est appliqué à un module de saturation 22 inséré en série dans la boucle d'asservissement en tension 6, entre les premiers moyens de conditionnement 12 de l'erreur de tension $\varepsilon_V$ et le générateur du signal modulé en largeur d'impulsion 13.

La fonction de saturation qui en résulte est représentée sur la **Figure 3b.** Le pourcentage d'excitation de sortie

$r_o$ qui est fonction du pourcentage d'excitation d'entrée $r_i$ est au plus égal au pourcentage d'excitation maximal admissible $r_{max}$ fourni par le module de commande 19, 20, 21.

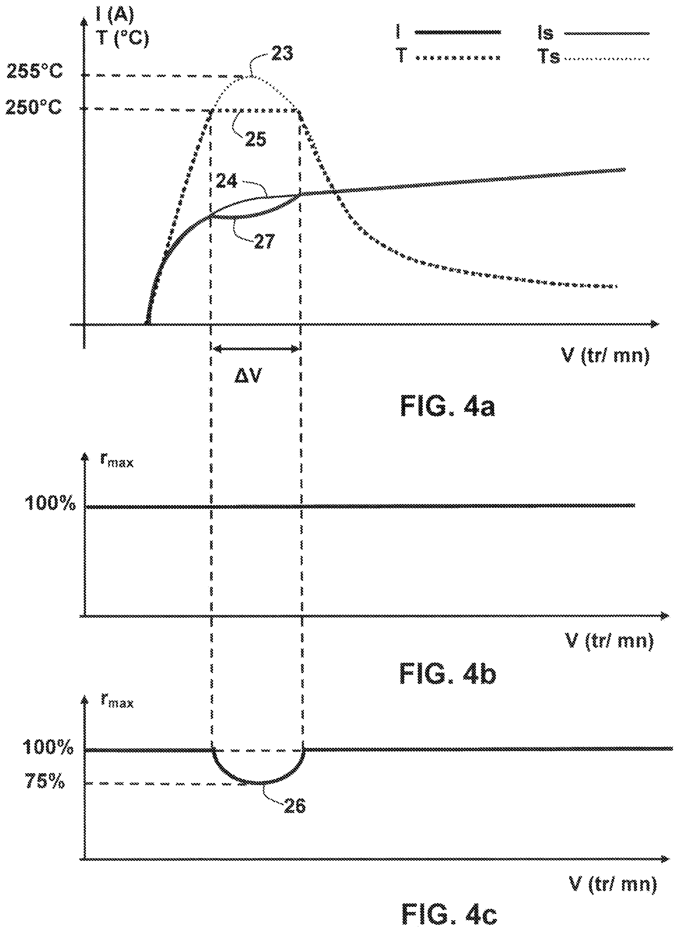

Les **Figures 4a, 4b et 4c** montrent l'effet de la boucle d'asservissement en température 15, 16, 17 pour un alternateur 9 muni du dispositif de régulation 5 selon l'invention par comparaison à un alternateur standard présentant un équilibre thermique critique dans une plage de vitesse critique ΔV sans le dispositif de régulation 5 selon l'invention, dans le cas où la température courante T est stabilisée dans un mode de fonctionnement quasi-stationnaire, ou dans une hypothèse où il n'est pas tenu compte d'une vitesse de rotation courante V.

Pour l'alternateur standard, la température courante Ts (trait pointillé fin 23) dépasse 250°C et atteint 255°C dans la plage de vitesse critique ΔV quand le débit Is (trait plein fin 24) augmente en fonction de la vitesse de rotation V comme le montre bien la **Figure 4a.** quand l'excitation reste "plein champ" **(Figure 4b).**

Pour l'alternateur 9 selon l'invention, la température courante T (trait pointillé épais 25) reste inférieure à 250°C.

Du fait du seul asservissement en température, l'excitation 26 ne reste pas "plein champ" dans la plage de vitesse critique ΔV, mais diminue de 25% dans cet exemple. Dans ces conditions, le débit I (trait plein épais 27) de l'alternateur selon l'invention est plus faible que le débit Is de l'alternateur standard, mais le maintien de l'alternateur 9 en dessous de 250 °C permet déjà de préserver l'intégrité de ses composants.

Le dispositif de régulation 5 selon l'invention permet d'éviter cette perte de débit I en prenant en compte la vitesse de rotation courante V de l'alternateur 9 dans la boucle d'asservissement en température 15, 16, 17 en régime de fonctionnement dynamique.

Pour les raisons indiquées précédemment, c'est aux alentours de 3000 tr/ mn que la machine 9 atteint sa température courante T la plus élevée. Cela signifie que si la machine 9 est stabilisée à 3000 tr/ mn et que la vitesse de rotation courante V diminue ou bien augmente, sa température courante T diminuera. Mais c'est un phénomène lent (constante de temps thermique de l'ordre de 200 s) au regard d'une transition de vitesse qui peut être de l'ordre de deux secondes par exemple.

Si la boucle d'asservissement en température 15, 16, 17 ne prenait pas en compte la vitesse de rotation courante V, cela entraînerait une dégradation du débit de courant I de la machine 9 lors de ces phases de transition en vitesse.

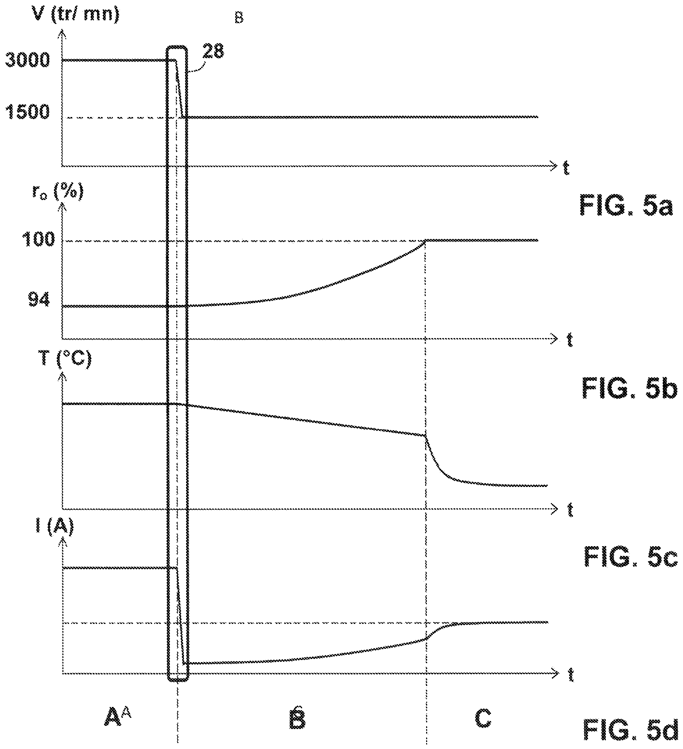

Les **Figures 5a, 5b, 5c et 5d** sont des exemples qui décrivent ce phénomène avant (en A) la transition de vitesse 28, après (en B) la transition de vitesse 28 et après le retour à l'équilibre thermique (en C):

A : La vitesse de rotation courante V de la machine 9 est stabilisée à 3000 tr/ mn **(Figure 5a).** La boucle d'asservissement en température 15, 16, 17 a fixé le pourcentage d'excitation de sortie $r_o$ à 94% **(Figure 5b)** pour limiter le débit I **(Figure 5d)** et ainsi contrôler la température courante T **(Figure 5c).**

Pendant transition de vitesse 28, la vitesse de rotation courante V évolue très rapidement de 3000 tr/ mn à 1500 tr/mn. La température courante T n'a encore quasiment pas changé, une limitation de l'excitation du rotor est donc toujours active à 94% tout au long de la transition de vitesse 28.

B : La température courante T de la machine 9 tend à diminuer **(Figure 5c);** en conséquence, la boucle d'asservissement en température 15, 16, 17 autorise petit à petit une excitation du rotor plus importante **(Figure 5b),** donc le débit I de la machine 9 augmente **(Figure 5d).**

C : L'excitation du rotor est revenue à 100% **(Figure 5b),** le débit I augmente encore un peu **(Figure 5d)** jusqu'à l'équilibre thermique **(Figure 5c)** de la machine 9.

A 1500 tr/ mn il n'y aurait finalement pas besoin de limiter la machine 9, mais la lente évolution de la température courante T provoque, durant et quelques temps après la transition de vitesse 28, une limitation du débit I. Il faudra un certain temps pour que la température courante T commence à diminuer, se stabilise et que le débit I de l'alternateur 9 rejoigne une valeur nominale.

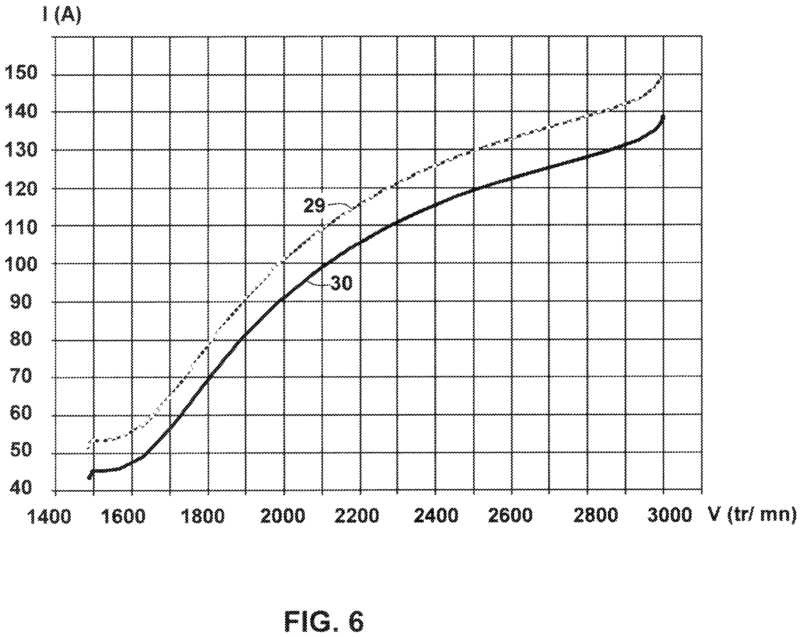

En s'intéressant plus précisément aux phénomènes qui se produisent pendant la transition de vitesse 28, on représente sur la **Figure 6** le débit I en fonction de la vitesse de rotation courante V pendant cette transition de vitesse 28.

La **Figure 6** établit une comparaison entre les relevés de débits au cours de la transition de vitesse 28 quand la boucle d'asservissement en température 5, 16, 17 selon l'invention est désactivée avant la transition de vitesse 28 (trait en pointillé 29) et quand elle est active (trait plein 30), dans l'hypothèse où la correction de vitesse selon l'invention n'est pas appliquée.

On note une perte de débit I d'une dizaine d'ampères pendant la transition de vitesse 28; ce chiffre est variable en fonction des machines 9 et des conditions d'essais, mais le comportement est identique quelle que soit la configuration de test.

Le comportement lors des phases de décélération et d'accélération du véhicule est amélioré selon l'invention par l'utilisation de la vitesse de rotation courante V de l'alternateur 9 en complément de la température courante T de la machine 9 dans la boucle d'asservissement en température 15, 16, 17. Ceci afin d'anticiper l'état thermique de la machine 9 et redonner du débit I le plus rapidement possible.

Le principe de l'invention est d'identifier au préalable la forme générale d'une loi de correction de vitesse pour un modèle donné d'une famille d'alternateurs, puis de mémoriser cette forme générale dans le dispositif de régulation 5.

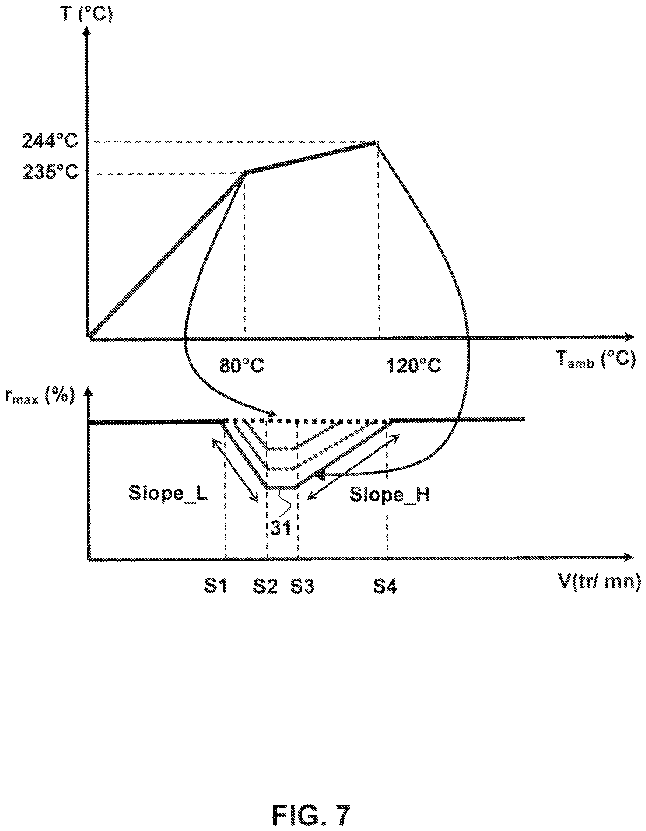

En mesurant le pourcentage d'excitation maximal admissible $r_{max}$, c'est-à-dire la limitation de l'excitation du rotor pendant que la machine 9 est contrôlée, on constate que les courbes obtenues ont une forme dite en «cuvette» qui peuvent alors être approximées telles que représentées sur la **Figure 7:**

- à faible vitesse de rotation courante V, aucune limitation de l'excitation $r_{max}$ n'est nécessaire car la machine 9 ne tourne pas assez vite pour débiter du courant, et donc ne chauffe pas;
- à partir d'une première vitesse de rotation S1, la limitation de l'excitation $r_{max}$, devient active car la machine 9 débite plus de courant, elle chauffe, mais la ventilation n'est pas assez efficace pour la refroidir. La limitation de l'excitation $r_{max}$ est de plus en plus importante à mesure que la vitesse de rotation courante V augmente.
- entre une deuxième vitesse de rotation S2 prédéterminée et une troisième vitesse de rotation S3 prédéterminée, situées en dessous et au dessus de 3000 tr/mn, la machine 9 travaille dans sa zone thermique critique et donc la limitation de l'excitation $r_{max}$ a atteint sa valeur maximale.
- passée cette troisième vitesse de rotation S3, la limitation de l'excitation $r_{max}$ se relaxe progressivement car la ventilation devient de plus en plus efficace.
- une quatrième vitesse de rotation S4 atteinte, il n'y a plus besoin de limiter l'excitation de la machine 9.

En fonction d'une température ambiante $T_{amb}$, l'amplitude de cette limitation de l'excitation varie. Les deuxième et troisième vitesses de rotation S2, S3, formant un plateau 31 de limitation maximale, sont par approximation considérées constantes, quelles que soient les conditions ambiantes.

Des pentes limitation de l'excitation $r_{max}$/ vitesse de rotation courante V, notées Slope_L entre les première et deuxième vitesses de rotation S1, S2, et Slope_H entre les troisième et quatrième vitesses de rotation S3, S4, sont également par approximation considérées constantes. Seules les première et quatrième vitesses de rotation S1, S4 sont variables et dépendent d'une amplitude de la limitation, c'est-à-dire de la température ambiante $T_{amb}$.

C'est l'utilisation de ces pentes limitation/vitesse Slope_L et Slope_H qui permet d'anticiper la limitation d'excitation et de redonner du débit I pendant les phases de transition de vitesse 28. A chaque valeur de température ambiante $T_{amb}$ correspond une valeur de correction fournissant une correction $V_{cor}$ en fonction de la vitesse.

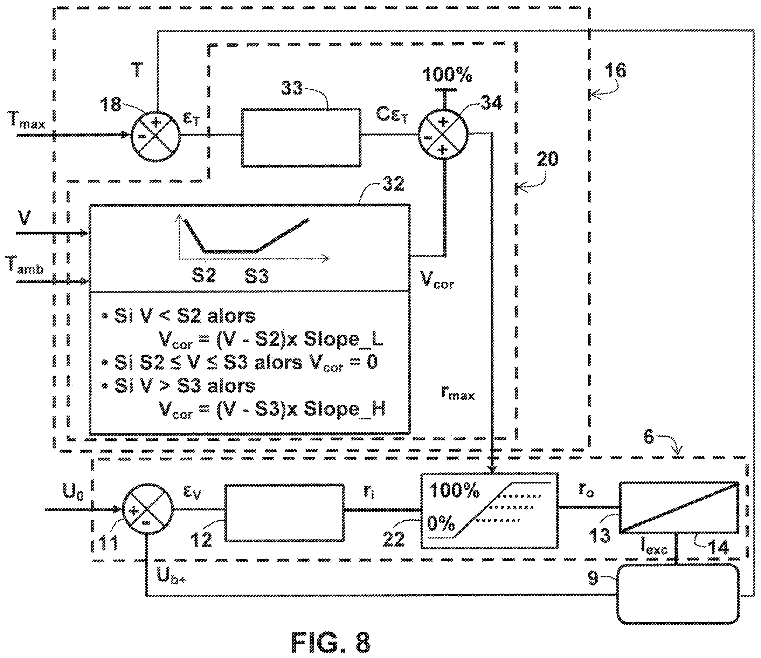

Dans un premier mode de réalisation préféré de l'invention montré sur la **Figure 8,** la boucle d'asservissement en température 16 comporte un module de commande 20 comprenant des moyens de correction de vitesse 32 dans lesquels les lois de correction montrées sur **la Figure 7** sont mémorisées.

Ce module de commande 20 génère la correction de vitesse $V_{cor}$ à partir de la vitesse de rotation courante V fournie par des moyens d'entrée et de la température ambiante $T_{amb}$.

Le module de commande 20 comprend en outre:

- des seconds moyens de conditionnement 33 de l'erreur de température $\varepsilon_T$ fournissant un pourcentage de correction thermique $C\varepsilon_T$;
- un comparateur-sommateur 34 calculant le pourcentage d'excitation maximal admissible $r_{max}$ en soustrayant le pourcentage de correction thermique $C\varepsilon_T$ d'une première somme d'un pourcentage d'excitation maximal de référence de 100% et de la correction de vitesse $V_{cor}$.

Le pourcentage d'excitation maximal admissible $r_{max}$ est donc donné par la relation: $r_{max} = 100\% - C\varepsilon_T + V_{cor}$.

Trois cas de figures sont possibles :

- la vitesse rotation courante V est inférieure à la deuxième vitesse de rotation S2; alors

$$V_{cor} = (V - S2) \times Slope\_L$$

Plus la vitesse rotation courante V est faible plus la correction de vitesse $V_{cor}$ est grande. L'impact de la température est contrebalancé. A une faible vitesse de rotation courante V, la machine 9 s'échauffe peu, la limitation d'excitation est ainsi réduite lors d'une transition de vitesse 28 décroissante.

- la vitesse rotation courante V est comprise entre la deuxième vitesse de rotation S2 et la troisième vitesse de rotation S3:

$$V_{cor} = 0$$

Un niveau du plateau 31 de limitation maximale n'est impacté que par la température courante T de l'alternateur 9.

- la vitesse rotation courante V est supérieure à la troisième vitesse de rotation S3; alors:

$$V_{cor} = (V - S3) \times Slope\_H$$

Plus la vitesse de rotation V est grande plus la correction de vitesse $V_{cor}$ est grande. L'impact de la température est contrebalancé. A une vitesse de rotation V élevée, la ventilation étant suffisamment efficace, la limitation d'excitation est ainsi réduite lors d'une transition 28 en vitesse croissante.

Le pourcentage d'excitation maximal admissible $r_{max}$ ainsi corrigé en fonction de la vitesse de rotation (et implicitement en fonction de la température ambiante $T_{amb}$) est transmis au module de saturation 22 de la boucle d'asservissement en tension 6.

Admettons, à titre d'exemple, que cette boucle d'asservissement en tension 6 exige un rapport cyclique d'excitation d'entrée $r_i$ de 96% pour maintenir la consigne de tension $U_0$ souhaitée. De son côté la boucle d'asservissement en température 16 transmet au module de saturation 22, qu'au vu des températures et de vitesse rotation V de machine 9 actuelles 94% est le maximum applicable.

Le module de saturation 22 ignorera donc les 96% requis par la régulation de tension 6 et appliquera les 94% calculés par la limitation de température 16. La conséquence directe sera une tension mesurée $U_{b+}$ inférieure à la consigne de tension $U_0$ mais une température courante T maîtrisée qui ne dépassera pas la température limite $T_{max}$.

En deçà de la première vitesse de rotation S1 et au-delà de quatrième vitesse de rotation S4, la correction de vitesse $V_{cor}$ est supérieure au pourcentage de correction thermique $C_{\varepsilon_T}$. Cela a comme conséquence qu'il n'y a simplement plus de limitation d'excitation, le pourcentage d'excitation maximal admissible $r_{max}$ est de 100%.

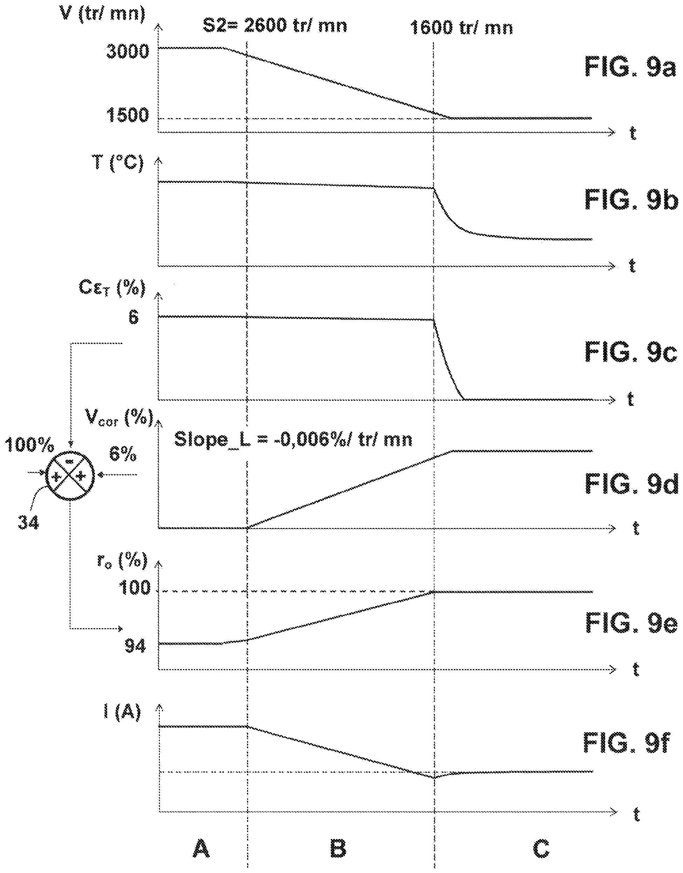

Les **Figures 9a, 9b, 9c, 9d, 9e et 9f** montrent bien l'impact de la prise en compte de la vitesse de rotation V **(Figure 9a)** sur le débit I **(Figure 9f)** par comparaison avec les **Figures 5a, 5b, 5c et 5d,** avant (en A), pendant (en B) et après (en C) une diminution de la vitesse de rotation courante V.

A : L'alternateur 9 est stabilisé à 3000 tr/ mn, c'est-à-dire dans le plateau 31 de limitation maximale entre la deuxième vitesse de rotation S2 (environ 2600 tr/ mn) et la troisième vitesse de rotation S3 (environ 3600 tr/ mn). La correction de vitesse $V_{cor}$ est alors nulle, seule la température courante T de la machine 9 est prise en compte. La vitesse de rotation courante V commence à diminuer **(Figure 9a).**

B : Dès que la vitesse de rotation courante V est inférieure à la deuxième vitesse de rotation S2 (vers 2600 tr/ mn), la correction de vitesse $V_{cor}$ devient non nulle avec comme paramètre la première pente Slope_L **(Figure 9d).** Le pourcentage d'excitation maximal admissible $r_{max}$ appliqué **(Figure 9e)** est fonction de l'erreur de température $\varepsilon_T$ et de la correction de vitesse $V_{cor}$.

C'est ici que le phénomène d'anticipation intervient: la lenteur d'évolution de la température est compensée par l'analyse de la vitesse.

C : A partir d'une certaine vitesse de rotation courante V, la somme algébrique du pourcentage d'excitation maximal de référence de 100%, du pourcentage de correction thermique $C_{\varepsilon_T}$ **(Figure 9c)** et de la correction de vitesse $V_{cor}$ réalisée par le comparateur- sommateur 34 est de 100% au moins; l'excitation n'est donc plus limitée et la machine 9 se stabilise en température **(Figure 9f).**

On notera que ce comportement décrit pour une décélération à partir de 3000 tr/ mn correspond également, par symétrie, à celui pour une accélération avec comme autres paramètres la troisième vitesse de rotation S3 et la seconde pente Slope_H.

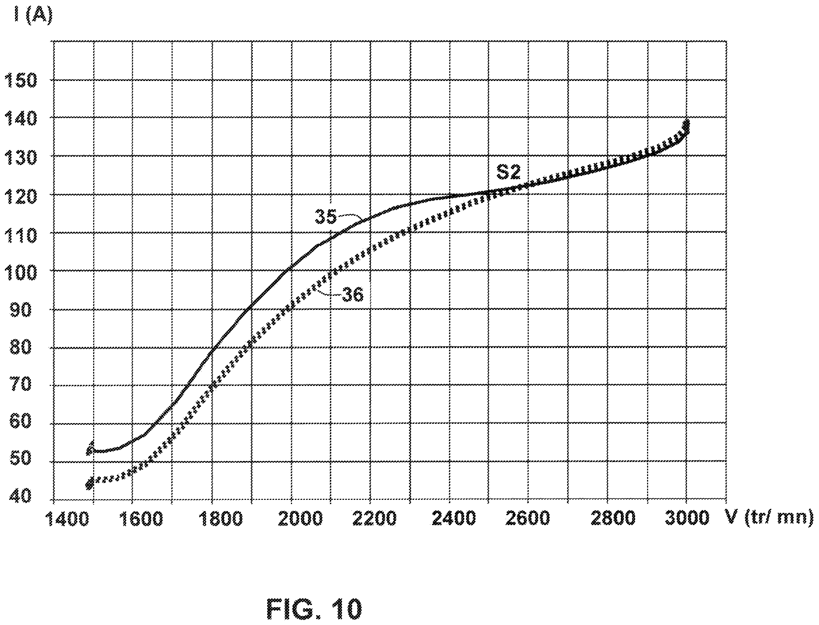

D'un point de vue du débit I de la machine 9 en fonction de la vitesse de rotation courante V, on obtient la courbe montrée sur la **Figure 10** (en trait plein 35) pour une transition de vitesse de 3000 tr/ mn à 1500 tr/ mn en deux secondes.

Par comparaison avec l'autre courbe (en trait pointillé 36) correspondant au cas où la correction de vitesse $V_{cor}$ selon l'invention ne serait pas appliquée, on observe clairement l'impact sur le débit I de la machine 9 pendant la phase transitoire, dès que la vitesse redescend en dessous de la deuxième vitesse de rotation S2 vers 2600 tr/ mn: le débit I est amélioré.

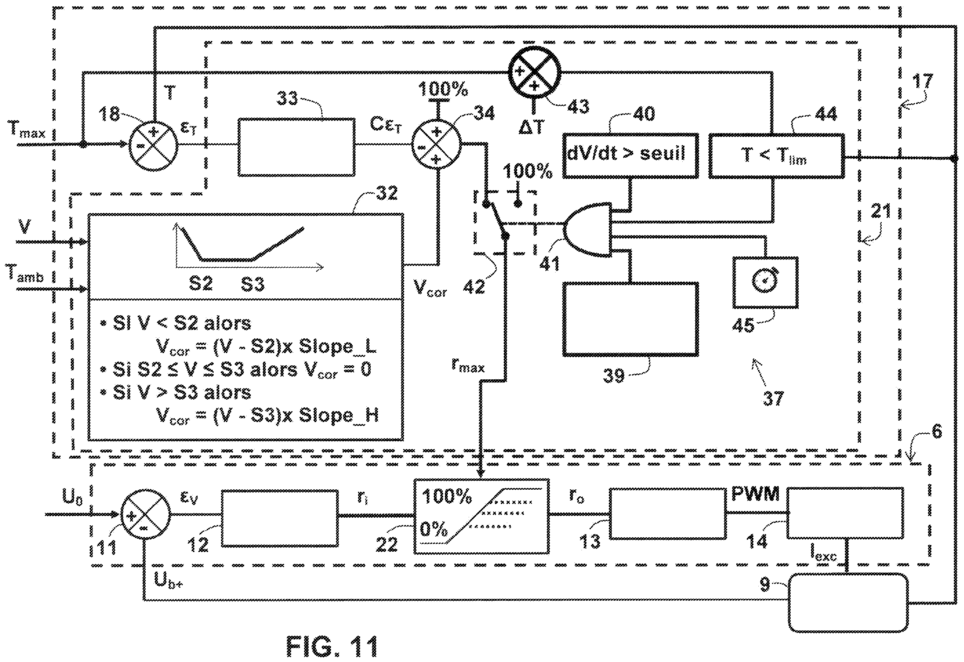

Dans un second mode de réalisation préféré de l'invention montré sur la **Figure 11,** la boucle d'asservissement en température 17 comporte un module de commande 19, 21 comprenant, outre des moyens de correction de vitesse 32 dans lesquels les lois de correction montrées sur **la Figure 7** sont mémorisées, des moyens de forçage 37 du pourcentage d'excitation maximal admissible $r_{max}$ au pourcentage d'excitation maximal de référence de 100%.

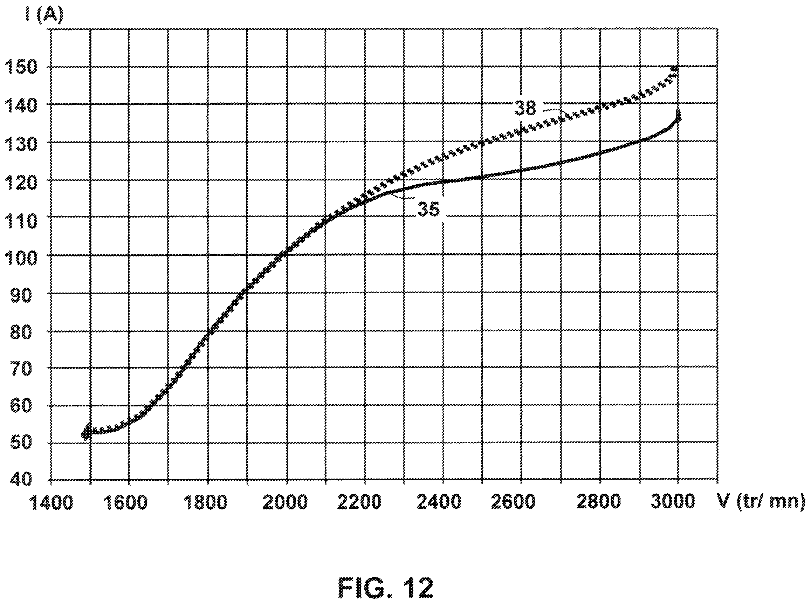

Ce second mode de réalisation incorpore la prise en compte de l'information de vitesse exposée précédemment et, de plus, autorise temporairement une levée de la limitation d'excitation durant les phases de transition en vitesse 28. Ceci dans le but de récupérer très vite un maximum de débit I de la machine 9, comme le montre la **Figure 12** (trait en pointillé 38) par comparaison avec la courbe de débit I obtenue avec le premier mode de réalisation de l'invention (trait plein 35).

De ce fait, on autorise un stress supplémentaire sur une température critique de la machine 9, par exemple une température du stator. Ce stress est pris en compte durant la conception de la machine 9. Un accroissement de température provisoire, noté $\Delta T$, de la température maximale admissible $T_{max}$ jusqu'à une température limite $T_{lim}$ est autorisée.

Une autorisation de désactivation de la limitation d'excitation, c'est-à-dire un forçage du pourcentage d'excitation maximal admissible $r_{max}$ au pourcentage d'excitation maximal de référence de 100%, se fait de la façon suivante:

- une unité de contrôle moteur 39 fournit aux moyens de forçage 37 un ordre d'activation;
- si et seulement si une variation temporelle dV/dt de la vitesse de rotation courante V supérieure en valeur absolue à un seuil prédéterminé est observée par un module de dérivation 40, alors l'ordre d'activation appliqué à des moyens de validation 41, commandant un inverseur 42 entre le pourcentage d'excitation maximal admissible $r_{max}$ et le pourcentage d'excitation maximal de référence de 100%, est validé;
- aussi longtemps que la température courante T est inférieure à la température limite $T_{lim}$ calculée par un additionneur 43, un module de détection 44 maintient une validation de l'ordre d'activation par les moyens de validation; dans le cas contraire, l'inverseur 42 rétablit immédiatement la limitation d'excitation au pourcentage d'excitation maximal admissible $r_{max}$ et une minuterie 45 est enclenchée. Jusqu'à une expiration d'une durée prédéterminée, aucun nouveau forçage à 100% du pourcentage d'excitation maximal admissible $r_{max}$ ne peut avoir lieu.

L'exemple décrit ci-après, qui est une forme de réalisation simple, en faisant référence notamment aux **Figures 9, 13 et 14,** illustre l'impact de la vitesse de rotation courante V sur un calcul de limitation thermique lors d'une transition de vitesse 28.

On souhaite intégrer le dispositif de régulation 5 selon le premier mode de réalisation de l'invention montré sur la **Figure 8** dans modèle d'alternateur fabriqué par l'entité inventive.

Dans un premier temps, on identifie les différents paramètres. Une limite thermique est fixée à 240°C maximum sur une température du stator.

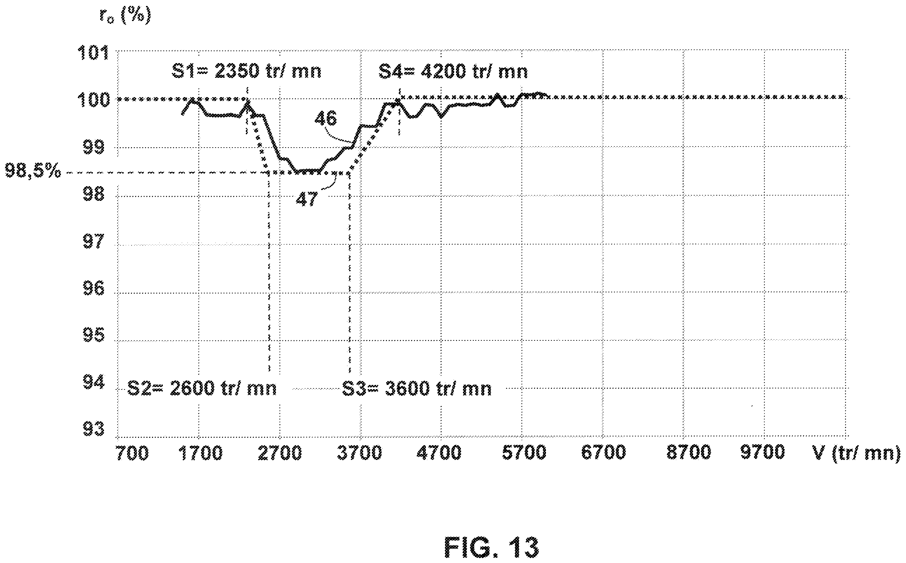

La courbe en trait plein 46 de la **Figure 13** correspond au pourcentage d'excitation maximal admissible $r_{max}$ appliqué en fonction de la vitesse de rotation courante V pour ne pas dépasser les 240°C sur le stator. La courbe en trait pointillé 47 est un tracé asymptotique de cette même limitation d'excitation.

De la courbe asymptotique 47, dite "de baignoire", sont extraites les valeurs des première et seconde pentes Slope_L, Slope_H, et des deuxième et troisième vitesses S2, S3:

- S2 = 2600 tr/ mn
- S3 = 3600 tr/ mn
-
$$\text{Slope\_L} = (98.5\% \text{ -}100\%)/(2600 \text{ tr/ mn} - 2350 \text{ tr/ mn}) = \text{- }0.006 \text{ \%/ tr/ mn}$$

-
$$\text{Slope\_H} = (100\% - 98.5\%)/(4200 \text{ tr/ mn} - 3600 \text{ tr/ mn}) = 0.0025 \text{ \%/ tr/ mn}$$

Maintenant que les valeurs des différents paramètres sont connues, on analyse le comportement temporel pendant une transition de vitesse en faisant référence à la **Figure 9**:.

A : La vitesse de rotation courante V est égale à 3000 tr/ mn.
On a donc S2 = V = S3, ce cas de figure implique $V_{cor}$ = 0. Ainsi, en considérant que de par la température courante T de la machine 9 une limitation de 6% est requise, on a :

$$r_{max} = 100\% \text{ - } C\varepsilon_T + V_{cor} = 100\% \text{ - } 6\% + 0\% = 94\%$$

La vitesse de rotation courante V commence à décroître.

B : La vitesse de rotation courante V est inférieure à la deuxième vitesse de rotation S2.

La transition est rapide, la température courante T mesurée de la machine 9 reste identique, donc $C\varepsilon_T$ = 6%.

Prenons quelques points en vitesse pour illustrer les calculs :

- V = 2400 tr/ mn

$$r_{max} = 100\% - C\varepsilon_T + V_{cor} = 100\% - C\varepsilon_T + (V - S2) \times Slope\_L$$

$$r_{max} = 100\% - 6\% + (2600 - 2400) \text{ tr/ mn} \times 0.006 \text{ \%/ tr/ mn}$$

$r_{max}$ = 95.2%

- V = 2000 tr/ mn

$$r_{max} = 100\% - 6\% + (2600 - 2000) \text{ tr/ mn} \times 0.006 \text{ \%/ tr/ mn}$$

$r_{max}$ = 97.6%

- V = 1600 tr/ mn

$$r_{max} = 100\% - 6\% + (2600 - 1600) \text{ tr/ mn} \times 0.006 \text{ \%/ tr/ mn}$$

$$r_{max} = 100\%$$

La correction de vitesse $V_{cor}$ compense complètement la limitation d'excitation requise par la température courante T de la machine. Le pourcentage d'excitation maximal admissible $r_{max}$ est de 100%

C : La vitesse de rotation courante V est inférieure à 1600 tr/ mn.

- V = 1500 tr/ mn

$$r_{max} = 100\% - 6\% + (2600 - 1500) \text{ tr/ mn} \times 0.006 \text{ \%/ tr/ mn}$$

$r_{max}$ = 100.6% limité à 100%, le dispositif de régulation 5 ne pouvant évidemment pas appliquer plus de 100% d'excitation.

Bien sûr, en dehors du cas de figure de transition en vitesse, la limitation thermique de la machine 9 est assurée.

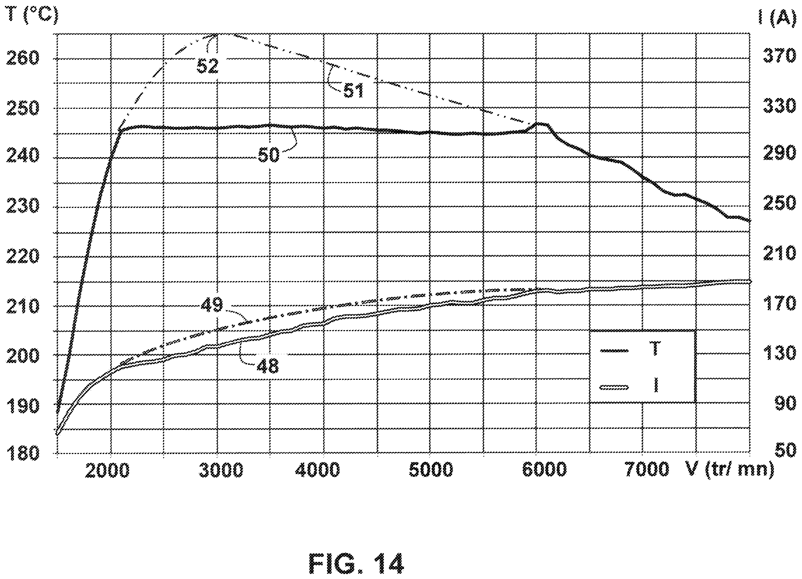

La **Figure 14** montre le comportement température/débit de la machine 9 en fonction des points stabilisés en vitesse avec les courbes de débit I (traits évidés 48, 49) et de température courante T (traits pleins 50, 51).

La température courante T (trait plein 50) de la machine 9 selon l'invention est maîtrisée par diminution du débit I (trait évidé 48). Les courbes en traits mixtes 49, 51 sont des projections du comportement de la machine 9 sans le dispositif de régulation 5 selon l'invention; la température de l'alternateur 9 serait alors beaucoup trop élevée (trait mixte plein 51), avec un maximum 52 à 265 °C, même si le débit est meilleur (trait mixte évidé 49).

Comme il va de soi, l'invention ne se limite pas aux seuls modes d'exécution préférentiels décrits ci-dessus.

Notamment, les valeurs particulières des températures, vitesses, pentes ou taux spécifiés ci-dessus ne sont données qu'à titre d'exemples.

Les différents blocs fonctionnels du dispositif de régulation 5, et en particulier ceux du module de commande 19, 20, 21, spécifiés pourront être réunis, scindés ou remplacés par d'autres blocs de manière à exécuter les mêmes fonctions.

L'invention embrasse donc au contraire toutes les variantes possibles de réalisation qui resteraient dans le cadre défini par les revendications ci-après.

**Revendications**

1. Dispositif de régulation (5) d'un alternateur (9) de véhicule automobile du type de ceux asservissant une tension continue (B+A) générée par ledit alternateur (9) à une consigne de tension prédéterminée ($U_0$) en contrôlant l'intensité d'un courant d'excitation ($I_{EXC}$) circulant dans un circuit d'excitation comportant un enroulement d'excitation d'un rotor dudit alternateur (9) et maintenant en outre une température courante (T) dudit alternateur (9) en dessous d'une température maximale admissible prédéterminée ($T_{max}$), comprenant une boucle d'asservissement en tension (6) comportant:

   - des moyens d'acquisition (10) de ladite tension continue (B+A) fournissant une tension mesurée ($U_{b+}$);
   - un premier comparateur (11) de ladite tension mesurée ($U_{b+}$) de ladite consigne de tension (U0) générant une erreur de tension ($\varepsilon_V$);

   et en ce qu'il comprend en outre une boucle d'asservissement en température (15, 16, 17) comportant:

   - un premier moyen de mesure/estimation de température fournissant ladite température courante (T);
   - un second comparateur (18) générant une erreur de température ($\varepsilon_T$) entre ladite température maximale admissible ($T_{max}$) et ladite température courante (T) ;
   - des moyens d'entrée d'une vitesse de rotation courante (V) dudit alternateur (9) ; **caractérisé en ce que** la boucle d'asservissement en tension (6) comporte :
   - des premiers moyens de conditionnement (12) de ladite erreur de tension ($\varepsilon_V$) fournissant un pourcentage d'excitation d'entrée ($r_i$);
   - un module de saturation (22) fournissant en fonction dudit pourcentage d'excitation d'entrée (ri) un pourcentage d'excitation de sortie ($r_o$) limité à un pourcentage d'excitation maximal admissible ($r_{max}$);
   - un générateur (13) d'un signal modulé en largeur d'impulsion (PWM) présentant un rapport cyclique égal audit pourcentage d'excitation de sortie ($r_o$);
   - un commutateur à semi-conducteur (14) piloté par ledit signal modulé en largeur d'impulsion (PWM) contrôlant ladite intensité (IEXC);

   et **en ce que** la boucle d'asservissement en température (15, 16, 17) comporte un module de commande (19, 20, 21) fournissant ledit pourcentage d'excitation maximal admissible ($r_{max}$) en fonction de ladite erreur de température ($\varepsilon_T$) et d'une correction de vitesse ($V_{cor}$) fournie par des moyens de correction de vitesse (32) selon une loi de correction prédéterminée fonction de ladite vitesse de rotation courante (V).

2. Dispositif de régulation (5) d'un alternateur (9) de véhicule automobile selon la revendication 1 précédente, **caractérisé en ce que** ladite boucle d'asservissement en température (15, 16, 17) comprend en outre un moyen de prise en compte d'une température ambiante ($T_{amb}$) et **en ce que** ladite loi de correction est paramétrée par ladite température ambiante ($T_{amb}$).

3. Dispositif de régulation (5) d'un alternateur (9) de véhicule automobile selon la revendication 2 précédente, **caractérisé en ce que** ladite loi de correction a une forme générale dite en cuvette et :

   - présente au moins une première pente (Slope_L) négative entre une première vitesse de rotation (S1) variable en fonction de ladite température ambiante ($T_{amb}$) et une deuxième vitesse de rotation (S2) prédéterminée;
   - est nulle entre ladite deuxième vitesse de rotation (S2) et une troisième vitesse de rotation (S3) prédéterminée;
   - présente au moins une seconde pente (Slope_H) positive entre ladite troisième vitesse de rotation (S3) et une quatrième vitesse de rotation (S4) qui varie en fonction de ladite température ambiante.

4. Dispositif de régulation (5) d'un alternateur (9) de véhicule automobile selon l'une quelconque des revendications 1 à 3 précédentes, **caractérisé en ce que** ledit module de commande (19, 20, 21) comprend en outre:

   - des seconds moyens de conditionnement (33) de ladite erreur de température ($\varepsilon_T$) fournissant un pourcentage de correction thermique ($C\varepsilon_T$);
   - un comparateur- sommateur (34) calculant ledit pourcentage d'excitation maximal admissible ($r_{max}$) en soustrayant ledit pourcentage de correction thermique ($C\varepsilon_T$) d'une première somme d'un pourcentage d'excitation maximal de référence et de ladite correction de vitesse (V_cor).

**5.** Dispositif de régulation (5) d'un alternateur (9) de véhicule automobile selon la revendication 4 précédente, **caractérisé en ce que** ledit module de commande (19, 20, 21) comprend en outre des moyens de forçage (37) dudit pourcentage d'excitation maximal admissible ($r_{max}$) audit pourcentage d'excitation maximal de référence (100%).

**6.** Dispositif de régulation (5) d'un alternateur (9) de véhicule automobile selon la revendication 5 précédente, **caractérisé en ce que** lesdits moyens de forçage (37) sont activés par un ordre d'activation d'une unité de contrôle moteur (39) dudit véhicule.

**7.** Dispositif de régulation (5) d'un alternateur (9) de véhicule automobile selon la revendication 6 précédente, **caractérisé en ce que** lesdits moyens de forçage (37) sont activés si et seulement si une variation temporelle (dV/dt) de ladite vitesse de rotation courante (V) est supérieure en valeur absolue à un seuil prédéterminé.

**8.** Dispositif de régulation (5) d'un alternateur (9) de véhicule automobile selon la revendication 7 précédente, **caractérisé en ce que** lesdits moyens de forçage (37) restent activés tant que ladite température courante (T) est inférieure à une température limite ($T_{lim}$) égale à ladite température maximale admissible ($T_{max}$) augmentée d'un accroissement de température ($\Delta T$) prédéterminé.

**9.** Dispositif de régulation (5) d'un alternateur (9) de véhicule automobile selon la revendication 8 précédente, **caractérisé en ce que** lesdits moyens de forçage (37) sont désactivés par une minuterie (45) pendant une durée prédéterminée quand ladite température courante (T) atteint ladite température limite ($T_{lim}$).

**10.** Alternateur (9) de véhicule automobile comprenant un dispositif de régulation (5) selon l'une quelconque des revendications 1 à 9 précédentes.

**Patentansprüche**

**1.** Vorrichtung zur Regelung (5) einer Lichtmaschine (9) eines Kraftfahrzeugs, vom Typ derjenigen, die eine von der Lichtmaschine (9) erzeugte Gleichspannung (B+A) auf einen vorbestimmten Spannungssollwert (Uo) regeln, indem sie die Stärke eines Erregerstroms ($I_{EXC}$) steuern, der in einem eine Erregerwicklung eines Rotors der Lichtmaschine (9) aufweisenden Erregerkreis fließt, und indem sie außerdem eine aktuelle Temperatur (T) der Lichtmaschine (9) unterhalb einer vorbestimmten zulässigen maximalen Temperatur ($T_{max}$) halten, eine Spannungsregelschleife (6) umfassend, welche aufweist:

- Mittel zur Erfassung (10) der Gleichspannung (B+A), die eine gemessene Spannung ($U_{b+}$) liefern;
- einen ersten Komparator (11) zum Vergleich der gemessenen Spannung ($U_{b+}$) mit dem Spannungssollwert ($U_0$), der einen Spannungsfehler ($\varepsilon_V$) erzeugt,

und dadurch, dass sie außerdem eine Temperaturregelschleife (15, 16, 17) umfasst,
welche aufweist:

- ein erstes Mittel zur Messung/Schätzung der Temperatur, das die aktuelle Temperatur (T) liefert;
- einen zweiten Komparator (18), der einen Temperaturfehler ($\varepsilon_T$) zwischen der zulässigen maximalen Temperatur ($T_{max}$) und der aktuellen Temperatur (T) erzeugt;
- Eingangsmittel für eine aktuelle Drehzahl (V) der Lichtmaschine (9);

**dadurch gekennzeichnet, dass** die Spannungsregelschleife (6) aufweist:

- erste Konditionierungsmittel (12) für den Spannungsfehler ($\varepsilon_V$), die einen Prozentsatz der Eingangserregung ($r_i$) liefern;
- ein Sättigungsmodul (22), das in Abhängigkeit von dem Prozentsatz der Eingangserregung ($r_i$) einen Prozentsatz der Ausgangserregung ($r_o$) liefert, der auf einen zulässigen maximalen Prozentsatz der Erregung ($r_{max}$) begrenzt ist;
- einen Generator (13) eines pulsweitenmodulierten (PWM) Signals, das ein Tastverhältnis aufweist, welches gleich dem Prozentsatz der Ausgangserregung ($r_o$) ist;
- einen von dem pulsweitenmodulierten (PWM) Signal angesteuerten Halbleiterschalter (14), der die Stromstärke (IEXC) steuert;

und dadurch, dass die Temperaturregelschleife (15, 16, 17) ein Steuerungsmodul (19, 20, 21) aufweist, das den zulässigen maximalen Prozentsatz der Erregung ($r_{max}$) in Abhängigkeit von dem Temperaturfehler ($\varepsilon_T$) und von einer Drehzahlkorrektur ($V_{cor}$) liefert, die von Drehzahlkorrekturmitteln (32) gemäß einem vorbestimmten Korrekturgesetz in Abhängigkeit von der aktuellen Drehzahl (V) geliefert wird.

2. Vorrichtung zur Regelung (5) einer Lichtmaschine (9) eines Kraftfahrzeugs nach dem vorhergehenden Anspruch 1, **dadurch gekennzeichnet, dass** die Temperaturregelschleife (15, 16, 17) außerdem ein Mittel zur Berücksichtigung einer Umgebungstemperatur ($T_{amb}$) umfasst, und dadurch, dass das Korrekturgesetz mit der Umgebungstemperatur ($T_{amb}$) parametriert ist.

3. Vorrichtung zur Regelung (5) einer Lichtmaschine (9) eines Kraftfahrzeugs nach dem vorhergehenden Anspruch 2, **dadurch gekennzeichnet, dass** das Korrekturgesetz eine als "wannenförmig" bezeichnete allgemeine Form hat und:

- wenigstens einen negativen ersten Anstieg (Slope_L) zwischen einer ersten Drehzahl (S1), die in Abhängigkeit von der Umgebungstemperatur ($T_{amb}$) variabel ist, und einer vorbestimmten zweiten Drehzahl (S2) aufweist;
- zwischen der zweiten Drehzahl (S2) und einer vorbestimmten dritten Drehzahl (S3) gleich null ist;
- wenigstens einen positiven zweiten Anstieg (Slope_H) zwischen der dritten Drehzahl (S3) und einer vierten Drehzahl (S4), welche in Abhängigkeit von der Umgebungstemperatur variiert, aufweist.

4. Vorrichtung zur Regelung (5) einer Lichtmaschine (9) eines Kraftfahrzeugs nach einem der vorhergehenden Ansprüche 1 bis 3, **dadurch gekennzeichnet, dass** das Steuerungsmodul (19, 20, 21) außerdem umfasst:

- zweite Konditionierungsmittel (33) für den Temperaturfehler ($\varepsilon_T$), die einen Prozentsatz der thermischen Korrektur ($C\varepsilon_T$) liefern;
- einen Summierkomparator (34), der den zulässigen maximalen Prozentsatz der Erregung ($r_{max}$) berechnet, indem er den Prozentsatz der thermischen Korrektur ($C\varepsilon_T$) von einer ersten Summe eines Referenz-Maximalprozentsatzes der Erregung und der Drehzahlkorrektur ($V_{cor}$) subtrahiert.

5. Vorrichtung zur Regelung (5) einer Lichtmaschine (9) eines Kraftfahrzeugs nach dem vorhergehenden Anspruch 4, **dadurch gekennzeichnet, dass** das Steuerungsmodul (19, 20, 21) außerdem Mittel zum Erzwingen (37) der Regelung des zulässigen maximalen Prozentsatzes der Erregung ($r_{max}$) auf den Referenz-Maximalprozentsatz der Erregung (100 %) umfasst.

6. Vorrichtung zur Regelung (5) einer Lichtmaschine (9) eines Kraftfahrzeugs nach dem vorhergehenden Anspruch 5, **dadurch gekennzeichnet, dass** die Erzwingungsmittel (37) durch einen Aktivierungsbefehl eines Motorsteuergerätes (39) des Fahrzeugs aktiviert werden.

7. Vorrichtung zur Regelung (5) einer Lichtmaschine (9) eines Kraftfahrzeugs nach dem vorhergehenden Anspruch 6, **dadurch gekennzeichnet, dass** die Erzwingungsmittel (37) dann und nur dann aktiviert werden, wenn eine zeitliche Änderung (dV/dt) der aktuellen Drehzahl (V) dem absoluten Betrag nach größer als ein vorbestimmter Schwellenwert ist.

8. Vorrichtung zur Regelung (5) einer Lichtmaschine (9) eines Kraftfahrzeugs nach dem vorhergehenden Anspruch 7, **dadurch gekennzeichnet, dass** die Erzwingungsmittel (37) so lange aktiviert bleiben, wie die aktuelle Temperatur (T) niedriger als eine Grenztemperatur ($T_{lim}$) ist, die gleich der um eine vorbestimmte Temperaturerhöhung ($\Delta T$) erhöhten zulässigen maximalen Temperatur ($T_{max}$) ist.

9. Vorrichtung zur Regelung (5) einer Lichtmaschine (9) eines Kraftfahrzeugs nach dem vorhergehenden Anspruch 8, **dadurch gekennzeichnet, dass** die Erzwingungsmittel (37) von einem Timer (45) während einer vorbestimmten Dauer deaktiviert werden, wenn die aktuelle Temperatur (T) die Grenztemperatur ($T_{lim}$) erreicht.

10. Lichtmaschine (9) eines Kraftfahrzeugs, welche eine Vorrichtung zur Regelung (5) nach einem der vorhergehenden Ansprüche 1 bis 9 umfasst.

**Claims**

1. Control device (5) for controlling a motor vehicle alternator (9) of the type which controls a DC voltage (B+A) generated by said alternator (9) at a predefined voltage setpoint (Uo) by controlling the intensity of an excitation current ($I_{EXC}$) flowing in an excitation circuit including an excitation winding of a rotor of said alternator (9) and furthermore maintaining a current temperature (T) of said alternator (9) below a predefined maximum admissible temperature ($T_{max}$), comprising a voltage control loop (6) including:

   - acquisition means (10) for acquiring said DC voltage (B+A) and which delivers a measured voltage ($U_{b+}$) ;
   - a first comparator (11) for comparing said measured voltage ($U_{b+}$) of said voltage setpoint (Uo) and which generates a voltage error ($\varepsilon_V$);

   and in that it furthermore comprises a temperature control loop (15, 16, 17) including:

   - a first temperature measurement/estimation means which delivers said current temperature (T);
   - a second comparator (18) which generates a temperature error ($\varepsilon_T$) between said maximum admissible temperature ($T_{max}$) and said current temperature (T) ;
   - input means for inputting a current rotation speed (V) of said alternator (9);

   **characterized in that** the voltage control loop (6) includes:

   - first conditioning means (12) for conditioning said voltage error ($\varepsilon_V$) which deliver an input excitation percentage ($r_i$) ;
   - a saturation module (22) which delivers, in accordance with said input excitation percentage ($r_i$), an output excitation percentage ($r_o$) limited to a maximum admissible excitation percentage (rmax);
   - a generator (13) for generating a pulse-width modulated signal (PWM) having a duty cycle equal to said output excitation percentage ($r_o$);
   - a semi-conductor switch (14) controlled by said pulse-width modulated signal (PWM) and which controls said intensity ($I_{EXC}$) ;

   and **in that** the temperature control loop (15, 16, 17) includes a control module (19, 20, 21) delivering said maximum admissible excitation percentage ($r_{max}$) in accordance with said temperature error ($\varepsilon_T$) and with a speed correction ($V_{cor}$) delivered by speed correction means (32) according to a predefined correction law in accordance with said current rotation speed (V).

2. Control device (5) for controlling a motor vehicle alternator (9) according to the preceding Claim 1, **characterized in that** said temperature control loop (15, 16, 17) furthermore comprises a means for taking account of an ambient temperature ($T_{amb}$) and **in that** said correction law is parameterized by said ambient temperature ($T_{amb}$) .

3. Control device (5) for controlling a motor vehicle alternator (9) according to the preceding Claim 2, **characterized in that** said correction law has a general form referred to as bowl-shaped and:

   - has at least one first slope (Slope_L) which is negative between a first rotation speed (S1) which is variable in accordance with said ambient temperature ($T_{amb}$) and a predefined second rotation speed (S2);
   - is zero between said second rotation speed (S2) and a predefined third rotation speed (S3);
   - has at least one second slope (Slope_H) which is positive between said third rotation speed (S3) and a fourth rotation speed (S4) which varies in accordance with said ambient temperature.

4. Control device (5) for controlling a motor vehicle alternator (9) according to any one of the preceding Claims 1 to 3, **characterized in that** said control module (19, 20, 21) furthermore comprises:

   - second conditioning means (33) for conditioning said temperature error ($\varepsilon_T$) which deliver a thermal correction percentage ($C\varepsilon_T$) ;
   - a summing comparator (34) calculating said maximum admissible excitation percentage ($r_{max}$) by subtracting said thermal correction percentage ($C\varepsilon_T$) from a first sum of a reference maximum excitation percentage and said speed correction ($V_{cor}$).

5. Control device (5) for controlling a motor vehicle alternator (9) according to the preceding Claim 4, **characterized**

**in that** said control module (19, 20, 21) furthermore comprises forcing means (37) for forcing said maximum admissible excitation percentage ($r_{max}$) to said reference maximum excitation percentage (100%).

6. Control device (5) for controlling a motor vehicle alternator (9) according to the preceding Claim 5, **characterized in that** said forcing means (37) are activated by an activation order from an engine control unit (39) of said vehicle.

7. Control device (5) for controlling a motor vehicle alternator (9) according to the preceding Claim 6, **characterized in that** said forcing means (37) are activated if and only if a temporal variation (dV/dt) in said current rotation speed (V) is above a predefined threshold in absolute value.

8. Control device (5) for controlling a motor vehicle alternator (9) according to the preceding Claim 7, **characterized in that** said forcing means (37) remain activated as long as said current temperature (T) is below a limit temperature ($T_{lim}$) equal to said maximum admissible temperature ($T_{max}$) increased by a predefined temperature increment ($\Delta T$).

9. Control device (5) for controlling a motor vehicle alternator (9) according to the preceding Claim 8, **characterized in that** said forcing means (37) are deactivated by a timer (45) for a predefined period when said current temperature (T) reaches said limit temperature ($T_{lim}$).

10. Motor vehicle alternator (9) comprising a control device (5) according to any one of the preceding Claims 1 to 9.

FIG. 1a

FIG. 1b

FIG. 2

$r_{max}$ (%)

100%

-200 °C     -100°C     0 °C     20 °C     100 °C     $\varepsilon_T$ (°C)

B2          A0          B1

**FIG. 3a**

$r_o$ (%)

100%

$r_{max}$

50%

$r_i$ (V)

0%

**FIG. 3b**

FIG. 4a

FIG. 4b

FIG. 4c

FIG. 5a

FIG. 5b

FIG. 5c

FIG. 5d

**FIG. 6**

FIG. 7

FIG. 8

FIG. 9a

FIG. 9b

FIG. 9c

FIG. 9d

FIG. 9e

FIG. 9f

FIG. 10

$T_{max}$

18 $\varepsilon_T$

T

33 $C\varepsilon_T$

100%

34

$\Delta T$ 43

40

dV/dt > seuil

44

T < $T_{lim}$

17

V

$T_{amb}$

32

S2    S3

$V_{cor}$

42

100%

41

21

• SI V < S2 alors
   $V_{cor} = (V - S2) \times Slope\_L$
• Si S2 ≤ V ≤ S3 alors $V_{cor} = 0$
• Si V > S3 alors
   $V_{cor} = (V - S3) \times Slope\_H$

$r_{max}$

39

45

37

6

$U_0$

$\varepsilon_V$

11

12

$r_i$

100%

0%

22

$r_o$

13

PWM

14

$I_{exc}$

$U_{b+}$

9

EP 3 437 183 B1

FIG. 11

FIG. 12

EP 3 437 183 B1

EP 3 437 183 B1

**FIG. 13**

FIG. 14

## RÉFÉRENCES CITÉES DANS LA DESCRIPTION

**Documents brevets cités dans la description**

- US 2006238172 A1
- WO 2012168605 A2
- FR 2938987